# EUROPÄISCHE PATENTSCHRIFT

(11) **EP 1 377 154 B1**
(45) Veröffentlichungstag und Bekanntmachung des Hinweises auf die Patenterteilung: **16.02.2005**
(21) Anmeldenummer: 02747270.3
(22) Anmeldetag: 10.04.2002
(51) Int. Cl.: A01G 9/02

(54) **PFLANZENBEHÄLTER**
PLANT POT
POT POUR PLANTES

(30) Priorität: 12.04.2001 DE 10118709
(43) Veröffentlichungstag der Anmeldung: 07.01.2004
(73) Patentinhaber: Von Bismarck GmbH, 23882 Grambeck (DE)
(72) Erfinder: KLEEBERG, Karsten, 18209 Bad Doberan (DE); MEISSNER, Horst, 25421 Pinneberg (DE)
(74) Vertreter: Schaeffer, Michael
(86) Internationale Anmeldenummer: PCT/EP2002/004011
(87) Internationale Veröffentlichungsnummer: WO 2002/082884

(56) Entgegenhaltungen:
- EP-A- 0 846 413
- DE-C- 19 918 418
- DE-U- 9 112 058
- FR-A- 2 556 928
- GB-A- 396 564
- US-B1- 6 332 287

## Beschreibung

Die Erfindung betrifft Pflanzenbehälter, nach dem Oberbegriff des Anspruchs 1.

Eine erfolgreiche Zimmerpflanzenkultur ist nur dann möglich, wenn der Pflanze bei der Wasser- und Sauerstoffversorgung möglichst optimale Bedingungen geboten werden. Eines der Hauptprobleme, die zu Mißerfolgen führen können, ist eine gleichmäßige Wasserversorgung der Pflanzen, die einerseits nicht austrocknen dürfen, aber andererseits in der Regel keine stauende Nässe vertragen. Stauendes Gießwasser bis in den Wurzelbereich hinein bedingt Sauerstoffmangel der Wurzeln, was zur Folge hat, daß diese anfangen zu faulen und damit die gesamte Pflanze über kurz oder lang eingeht. Eine hinreichende Sauerstoffversorgung der Wurzeln ist besonders für epiphytisch wachsende Pflanzen notwendig, so daß schon verschiedene Vorschläge gemacht worden sind, Pflanzenbehälter zu entwickeln, die einerseits über eine hinreichende Dränage und andererseits eine hinreichende Luftzufuhr verfügen. So ist aus der DE-U-91 12 058 ein Behälter für die Einzelpflanzung von Orchideen bekannt, der aus einem Gittertopf besteht, der in einem Übertopf angeordnet wird, dessen Boden als Wasserreservoir ausgebildet ist der im oberen Bereich über Luftzirkulationsöffnungen verfügt.

Der Nachteil solch vorbekannter Pflanzenbehälter besteht allerdings darin, daß bei übermäßigem Gießen der Boden des Gittertopfes mit dem im Reservoir befindlichen Wasser in Berührung kommen kann und daß darüber hinaus die Luftzirkulation nur begrenzt möglich ist. Daher besteht noch ein Bedürfnis nach Pflanzenbehältern, die einerseits überschüssiges Gießwasser sicher ableiten und die andererseits eine stärkere Sauerstoffzufuhr an die Wurzeln ermöglichen.

Zur Lösung der Aufgabe werden Pflanzenbehälter vorgeschlagen, die dadurch gekennzeichnet sind, daß der Abdeckmantel sich nach unten konisch verbreitert und zwischen Gittertopf bzw. Trägereinsatz und Abdeckmantel ein umlaufender Luftspalt vorgesehen ist.

Überraschenderweise hat sich gezeigt, daß durch die Konstruktion eines Pflanzenbehälters aus einem Gittertopf, der zusammen mit dem Pflanzsubstrat die Pflanze aufnimmt und der dann in einen Trägereinsatz eingesetzt wird, der gleichzeitig als Wasserspeicher dient, aber einen Überlauf aufweist, und durch einen mit dem Gittertopf verbundenen Abdeckmantel ein unerwartet gutes Wachstum der Pflanzen erreicht werden kann. Der mit dem Gittertopf verbundene Abdeckmantel weist Kegelstumpfform auf, d.h. er verjüngt sich nach oben bzw. verbreitert sich nach unten hin, so daß zwischen Gittertopf und Mantel ein unten offener umlaufender Luftschlitz gebildet wird. Durch diese Konstruktion ist es möglich, daß die Luft kaminartig durch das System gezogen wird, wobei die Luftbewegung nach oben eine gute Luftzirkulation im Bereich der Wurzeln garantiert. Beim Gießen wird das nicht von der Pflanze aufgenommene Wasser im Trägereinsatz gespeichert, der aber über einen Überlauf verfügt, der vorzugsweise in eine mit dem Trägereinsatz verbundene Wasserauffangschale führt, so daß eine Überfüllung des Wasserspeichers sicher verhindert wird. Vorzugsweise wird zwischen Gittertopf und Trägereinsatz ein Auffangkorb vorgesehen, um zu verhindern, daß Teile des Substrates in das Reservoir gelangen können. In einer weiteren bevorzugten Ausführungsform ist der Boden des Gittertopfes mit einem Filter bedeckt, um das Einwandern unerwünschter Mikroorganismen durch die Absorptionsfähigkeit eines solchen Filters zu verhindern oder jedenfalls zu reduzieren. Als Filter können Kohlefilter, aber auch Filter auf Basis von Kieselgur oder Zeolithen eingesetzt werden, die durch ihre hohe Absorptivität das Wachstum von Mikroorganismen reduzieren.

Der Wasserspeicher des Trägereinsatzes ist vorzugsweise mit grobkörnigen Partikeln gefüllt, wie beispielsweise mit Kies, Kieseln, zerkleinertem Gestein wie beispielsweise Basalt oder Tuff um einerseits die Verdunstung von ablaufendem Gießwasser zu fördern, aber andererseits auch als langfristiger Düngerspeicher zu dienen, da grobkörnige Gesteinspartikel mit der Zeit durchaus - wenn auch in kleinen Mengen - von den Pflanzen benötigte Spurenelemente abgeben. Anstelle von anorganischem grobkörnigen Material können ggf. auch organische Materialien wie Kunststoffschnitzel oder -kügelchen, die ggf. mit Spurenelementen imprägniert oder beschichtet sein können, als Füllstoff für das Reservoir verwendet werden.

Weiterhin hat es sich bewährt, wenn unter dem Boden des Auffangkorbes zumindest an einer Stelle einer oder mehrere Magneten angebracht werden, da das Wurzelwachstum von Pflanzen durch die Anlegung eines Magnetfeldes positiv beeinflußt werden kann.

In einer weiteren Ausführungsform sind zumindest der untere Teil des Abdeckmantels oder der Boden der Wasserauffangschale mit Heizmöglichkeiten versehen, wodurch zwei Effekte erreicht werden können, nämlich einmal eine Verstärkung des Kamineffektes durch eine erhöhte Temperatur zumindest eines Teiles des Abdeckmantels oder der Wasserauffangschale, wobei im letzteren Falle noch hinzu kommt, daß dadurch die Verdunstung evtl. in der Schale stehenden Wassers gefördert und die Luftfeuchtigkeit im Bereich der Wurzeln erhöht wird. Eine erhöhte Luftfeuchtigkeit in diesem Bereich ist dem Wachstum der Pflanzen außerordentlich förderlich im Gegensatz zu einer stauenden Nässe bei übermäßigem Gießen.

Wenn die Durchlüftung des Substrates noch stärker gefördert werden soll, kann der Gittertopf mit mindestens einem oder mehreren Belüftungsrohren versehen sein, die mit dem umlaufenden Luftschlitz in Verbindung stehen, so daß auf diese Weise der Luft- und damit Sauerstoffaustausch im Bereich der Wurzeln deutlich erhöht werden kann.

Je nach Standplatz der Pflanze kann ebenfalls vorgesehen werden, daß oberhalb des Montageringes, mit dem Gittertopf und Abdeckmantel verbunden werden, Beleuchtungskörper mit pflanzenverträglichen Lichtquellen angebracht werden, wenn der Standplatz der Pflanze oder das Klima eine zusätzliche Belichtung erforderlich machen. Geeignete Entladungsröhren, die stärker im Bereich des blauen Lichtes emittieren, sind im Handel erhältlich.

Bei der Montage des Pflanzenbehälters wird der Trägereinsatz mit einteiligen Partikeln aufgefüllt und dann der Abdeckkorb auf den Trägereinsatz aufgesetzt, wobei der Magnet ggf. am Boden des Abdeckkorbes angebracht werden kann. Daraufhin wird der Filter in den Abdeckkorb eingebracht und der Trägereinsatz in dieser vorbereiteten Form mit dem Abdeckmantel versehen, beispielsweise durch Haltelaschen oder Schnappverbindungen. Daran anschließend wird die Wasserauffangschale mit dem Trägereinsatz verbunden.

Der bepflanzte Gittertopf wird dann anschließend in das System eingesetzt und eine feste Verbindung zwischen Gittertopf und Abdeckmantel durch einen Montagering herbeigeführt, der beispielsweise durch Schnappverbindungen oder durch Verklebung befestigt werden kann.

Bei einer weiteren Ausführungsform der Erfindung, die insbesondere für große Pflanzen und damit große Pflanzenbehälter geeignet ist, können der Filter, der Magnet und/oder der Wasserspeicher mit den grobkörnigen Partikeln auch als Module ausgebildet werden, die einen Einzelersatz erlauben, um zu verhindern, daß die nach dem Bepflanzen sehr schweren Pflanzenbehälter bewegt und gehoben werden müssen. Derartige Module können schubladenförmig ausgestaltet sein, so daß nach Abnahme des Abdeckmantels ein Austausch erfolgen kann, ohne daß das ganze System zur Erneuerung auseinandergenommen werden muß.

### Die Erfindung wird im folgenden anhand der Figur näher erläutert:

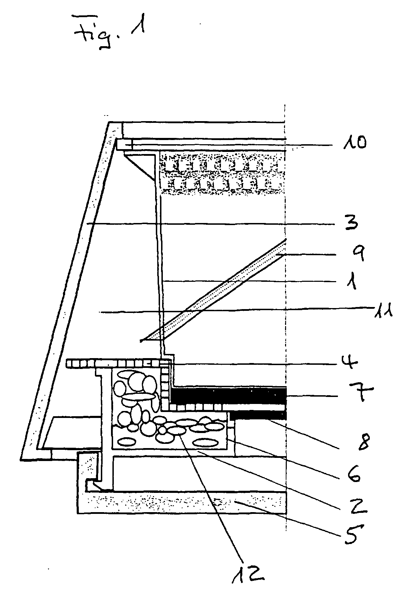

Die Fig. 1 zeigte einen erfindungsgemäßen Pflanzenbehälter im Längsschnitt. Der Gittertopf 1 ist ein einen Abdeckkorb 4 eingesetzt, wobei der Boden des Gittertopfes mit einem Filter 7 versehen ist. Der Abdeckkorb 4 ist in den Trägereinsatz 2 so eingesetzt, daß aus dem Gittertopf ablaufendes Wasser in einem Wasserspeicher 12 aufgefangen wird, wobei dieser Wasserspeicher mit grobkörnigen Partikeln 6 versehen ist. Der Trägereinsatz ist weiterhin mit einem Magneten 8 versehen, der sich unterhalb des Bodens des Gittertopfes 1 befindet. Das Wasserreservoir 12 steht durch einen Überlauf mit der Wasserauffangschale 5 in Verbindung, die ihrerseits mit dem Luftschlitz 11 kommuniziert, so daß verdunstendes Wasser sich ebenfalls hierin bewegen kann.

Die Verbindung zwischen dem kegelstumpfförmigen Abdeckmantel 3 und dem Gittertopf erfolgt vorzugsweise über einen Montagering 10.

Zur Verstärkung der Belüftung können innerhalb des Gittertopfes 1 ein oder mehrere Luftzuführungsrohre 9 vorgesehen sein.

## Patentansprüche

1. Pflanzenbehälter bestehend aus einem Gittertopf (1) und einem Trägereinsatz (2) und einem damit lösbar verbundenen Abdeckmantel (3), **dadurch gekennzeichnet, daß** der Abdeckmantel (3) sich nach unten konisch verbreitert und zwischen Gittertopf (1) bzw. Trägereinsatz (2) und Abdeckmantel (3) ein umlaufender Luftschlitz (11) vorgesehen ist.

2. Pflanzenbehälter nach Anspruch 1, **dadurch gekennzeichnet, daß** der Trägereinsatz (2) einen Wasserspeicher mit. Überlauf (12) aufweist.

3. Pflanzenbehälter nach Anspruch 1 bis 2, **dadurch gekennzeichnet, daß** der Trägereinsatz (2) mit einer Wasserauffangschale (5) verbunden ist.

4. Pflanzenbehälter nach Anspruch 1 bis 3, **dadurch gekennzeichnet, daß**. zwischen Gittertopf (1) und Trägereinsatz (2) ein Abdeckkorb (4) angeordnet ist.

5. Pflanzenbehälter nach Anspruch 1 bis 4, **dadurch gekennzeichnet, daß** die Verbindungen zwischen Gittertopf (1) und Abdeckmantel (3) sowie zwischen Trägereinsatz (2) und Wasserauffangschale (5) lösbar, vorzugsweise als .Schnappverbindungen, ausgebildet sind.

6. Pflanzenbehälter nach Anspruch 1 bis 5, **dadurch gekennzeichnet, daß** der Boden des Gittertopfes (1) mit einem Filter (7) versehen ist.

7. Pflanzenbehälter nach Anspruch 1 bis 6, **dadurch gekennzeichnet, daß** der Wasserspelcher (12) mit grobkörnigen Partikeln gefüllt ist.

8. Pflanzenbehälter nach Anspruch 1 bis 7, **dadurch gekennzeichnet, daß** unter dem Boden des Abdeckkorbes (4) ein Magnet (8) angeordnet ist.

9. Pflanzenbehälter nach Anspruch 1 bis 8, **dadurch gekennzeichnet, daß** im Gittertopf (1) zusätzlich ein oder mehrere Belüftungsrohre (9) vorgesehen sind.

10. Pflanzenbehälter nach Anspruch 1 bis 9, **dadurch gekennzeichnet, daß** zumindest der untere Teil des Abdeckmantels (3) oder der Boden der Wasserauffangschale (5) heizbar ist.

11. Pflanzenbehälter nach Anspruch 1 bis 10, **dadurch gekennzeichnet, daß** auf dem oberen Rand des Abdeckmantels (3) eine Beleuchtungsvorrichtung mit pflanzenverträglichem Licht vorgesehen ist.

## Claims

1. A plant container comprising a latticework pot (1) and a carrier insert (2) and a covering jacket (3) detachably joined to them, **characterized in that** the covering jacket (3) is widened downwards conically and a continuous air slot (11) is provided between the latticework pot (1) or the carrier insert (2) and the covering jacket (3).

2. A plant container according to Claim 1, **characterized in that** the carrier insert (2) has a water reservoir with an overflow (12).

3. A plant container according to Claims 1 to 2, **characterized in that** the carrier insert (2) is connected to a water-collecting bowl (5).

4. A plant container according to Claims 1 to 3, **characterized in that** a covering basket (4) is arranged between the latticework pot (1) and the carrier insert (2).

5. A plant container according to Claims 1 to 4, **characterized in that** the connexions between the latticework pot (1) and the covering jacket (3) and between the carrier insert (2) and the water-collecting bowl (5) are made releasable, preferably in the form of snap connexions.

6. A plant container according to Claims 1 to 5, **characterized in that** the base of the latticework pot (1) is provided with a filter (7).

7. A plant container according to Claims 1 to 6, **characterized in that** the water reservoir (12) is filled with large-grain particles.

8. A plant container according to Claims 1 to 7, **characterized in that** a magnet (8) is arranged below the base of the covering basket (4).

9. A plant container according to Claims 1 to 8, **characterized in that** one or more ventilating tubes (9) are additionally provided in the latticework pot (1).

10. A plant container according to Claims 1 to 9, **characterized in that** at least the lower part of the covering jacket (3) or of the base of the water-collecting bowl (5) is heatable.

11. A plant container according to Claims 1 to 10, **characterized in that** an illumination device with plant-compatible light is provided on the upper edge of the covering jacket (3).

## Revendications

1. Récipient pour plantes comprenant un pot ajouré (1) et un élément support (2) ainsi qu'une enveloppe d'habillage (3) liée de manière démontable à ceux-ci, **caractérisé en ce que** l'enveloppe d'habillage (3) s'élargit vers le bas en forme de cône et qu'un espace (11) périphérique est prévu entre le pot ajouré (1) et l'élément support (2), d'une part, et l'enveloppe d'habillage (3), d'autre part.

2. Récipient pour plantes selon la revendication 1, **caractérisé en ce que** l'élément support (2) comprend un réservoir à eau muni d'un trop-plein (12).

3. Récipient pour plantes selon les revendications 1 à 2, **caractérisé en ce que** l'élément support (2) est relié à un bac (5) collecteur d'eau.

4. Récipient pour plantes selon les revendications 1 à 3, **caractérisé en ce qu'**un panier de recouvrement (4) est disposé entre le pot ajouré (1) et l'élément support (2).

5. Récipient pour plantes selon les revendications 1 à 4, **caractérisé en ce que** les liaisons entre le pot ajouré (1) et l'enveloppe d'habillage (3) et entre l'élément support (2) et le bac (5) collecteur d'eau sont libérables et réalisées de préférence sous la forme de liaisons encliquetables.

6. Récipient pour plantes selon les revendications 1 à 5, **caractérisé en ce que** le fond du pot ajouré (1) est pourvu d'un filtre (7).

7. Récipient pour plantes selon les revendications 1 à 6, **caractérisé en ce que** le réservoir à eau (12) est rempli d'un matériau à grosses particules.

8. Récipient pour plantes selon les revendications 1 à 7, **caractérisé en ce qu'**un aimant (8) est disposé sous le fond du panier de recouvrement (4).

9. Récipient pour plantes selon les revendications 1 à 8, **caractérisé en ce qu'**il est prévu en plus dans le pot ajouré (1) un ou plusieurs tube(s) d'aération (9).

10. Récipient pour plantes selon les revendications 1 à 9, **caractérisé en ce qu'**au moins la partie inférieure de l'enveloppe d'habillage (3) ou le fond du bac (5) collecteur d'eau peut être chauffée.

11. Récipient pour plantes selon les revendications 1 à 10, **caractérisé en ce qu'**il est prévu, sur le bord supérieur de l'enveloppe d'habillage (3), un dispositif d'éclairage dispensant une lumière tolérée par les plantes.
